Europäisches Patentamt

(19) European Patent Office (11) Publication number: **0 101 712**

Office européen des brevets **B1**

(12) **EUROPEAN PATENT SPECIFICATION**

(45) Date of publication of patent specification: **29.07.87** (51) Int. Cl.⁴: **F 16 L 55/16**

(21) Application number: **83900812.5**

(22) Date of filing: **01.03.83**

(86) International application number:
**PCT/SE83/00067**

(87) International publication number:
**WO 83/03131 15.09.83 Gazette 83/21**

(54) **A LINING HOSE FOR RESTORING OR MAKING A CONVEYOR CHANNEL.**

| | |
|---|---|
| (30) Priority: **01.03.82 SE 8201259** | (73) Proprietor: **FORSHEDA INNOVATION AB**<br>**S-330 12 Forsheda (SE)** |
| (43) Date of publication of application:<br>**07.03.84 Bulletin 84/10** | (72) Inventor: **WOLFF, Ingemar**<br>**Skälsebo Skola**<br>**S-570 93 Figeholm (SE)** |
| (45) Publication of the grant of the patent:<br>**29.07.87 Bulletin 87/31** | |
| | (74) Representative: **Nordén, Ake**<br>**AWAPATENT AB Box 7402**<br>**S-103 91 Stockholm (SE)** |
| (84) Designated Contracting States:<br>**AT BE CH DE FR GB LI NL SE** | |
| (56) References cited:<br>**DE-A-2 629 214**<br>**DE-A-2 912 840**<br>**DE-C-2 362 784**<br>**DK-B- 139 243**<br>**GB-A-1 161 407**<br>**US-A-3 123 101**<br>**US-A-3 149 646** | |

Courier Press, Leamington Spa, England.

## Description

The present invention relates to a hose-like lining for restoring or making a conveyor channel or pipeline for fluid, especially water, along an already existing cavity formed of a section of a damaged and untight conventional pipeline or consisting of holes in successively arranged elements, e.g. of insulating material, by insertion of the lining in said cavity, the lining including an inner layer which is fluid-tight, permanently elastic, soft and resistant to the material being conveyed.

From Swedish Patent specifications 337,784 and 337,785 there are already known methods and arrangements for drawing linings into pressure-absorbing pipes already existing or designed for this purpose. A condition for obtaining a quite satisfactory result with the prior art methods is that the outer pipe has ability to absorb the pressure strains from the lining tube or hose formed of soft material.

DE—A1—2 629 214 discloses a method for lining pipelines and the lining suggested includes an elastic compound and embedded reinforcement means having high resistance against compression in the axial direction and high ability to bend in the peripheral direction. A condition for the successful use of linings of this type is that the pipe wall is essentially undamaged and free from holes, breaks and the like, through which the lining — upon applying the pressure — could bulge out and eventually burst.

Due to corrosion, settings in the ground or the like pipelines of metal, plastic material, concrete and the like can have leaks or cracks which can be repaired only if the pipe is dug up and replaced or, alternatively, is uncovered and repaired in situ. When it is a matter of old pipelines there is often no point in repairing leaks caused by corrosion but it will be necessary to dig up and replace the entire section of the pipe where damages have been encountered. It goes without saying that such operations will become expensive and take much time because, in addition to the direct expenditure in connection with the excavation, the taking up of existing pipes and laying of new pipes will involve comprehensive ground and restoration work. In pipelines having damages of this type it is not possible to utilize the methods known from the above-mentioned patent specifications because one cannot be quite sure that the damaged sections of the pipe have the pressure-absorbing ability required. If, for example, a pipe fracture is the result of settings on the ground a soft lining tube in the fracture zone would not have the necessary support in the radial sense and the lining tube would thus be pressed out through the fracture opening and probably burst when the pipe is subjected to pressure. This can also happen when an unprotected lining tube is introduced for example in an already existing coldwater conduit having internally un-broached, very sharp pipe ends formed when the pipe is cut. When the unprotected soft lining tube is pulled in or is pressed by the internal water pressure against these sharp edges a break is likely to take place through the wall of the lining tube.

From DK—B—139,243 it is previously known to provide untight pipes with a lining by drawing into the pipe a hardenable, expandible hose of plastic material, which may include a reinforcement permitting radial as well as axial expansion, which hose is caused to expand by means of hot, pressurized medium, so that it will bear against the inside of the pipe, and is hardened. Said known hose can be said to float in the cavity formed of the pipe and will thus assume a shape conforming therewith. The hose being designed for flanged conduits is to form a collar over the flanges of the conduit so as to constitute a complementary flange seal. The condition for this hose to function is that the hose being expanded will meet a moulding wall defining the expansion. If it is a question of lining a practically intact pipe no problem will arise but when a break is to be bridged there is a great risk that the hose material will expand in balloon fashion, which can give rise to unacceptable pocket formations in the pipeline and a great risk of hose rupture caused by the edges of the fracture. That hose involves no safe solution of the problems.

The object of this invention is to provide a hose specifically designed therefor, permitting, on one hand, a reliable and unproblematic installation of linings in damaged pipes independently of the extension and position of the damage and, on the other hand, a permanent appropriate flow stream function in the pipe restored according to the method. The object can be considered to include the provision of a fluid passage in an existing cavity which cavity has no claim to tightness and pressure-absorbing ability.

The essential characteristic of the hose like lining is that the same includes a covering of durable, pressure-absorbing, non-fluidtight material which has insignificant ability to expand and contract axially, but is peripherally permanently elastic to a limited degree so as to be expandible in the peripheral sense to a certain limit, and by that the limit of the peripheral elasticity of the hose-like lininig is thereby so pre-set in relation to the size of the cavity that the lining, in its expanded state, will reach a diameter essentially not exceeding the normal diameter of the cavity.

The invention will be described more fully below with reference to the accompanying drawings in which:

Fig. 1 shows a schematic cross-section through a pipe or cavity provided with an internal lining according to the invention;

Fig. 2 is a cross-sectional view of the lining;

Fig. 3 shows a schematic cross-section through a damaged pipe into which a hose according to the invention is pulled in;

Fig. 4 shows a schematic longitudinal section illustrating the ability of the internal lining or lining hose to adapt itself and to absorb pressure strains;

Fig. 5 is a longitudinal section showing how the lining is drawn in; and

Fig. 6 is a schematic view of a pipe system showing how it can be provided with an inside lining hose.

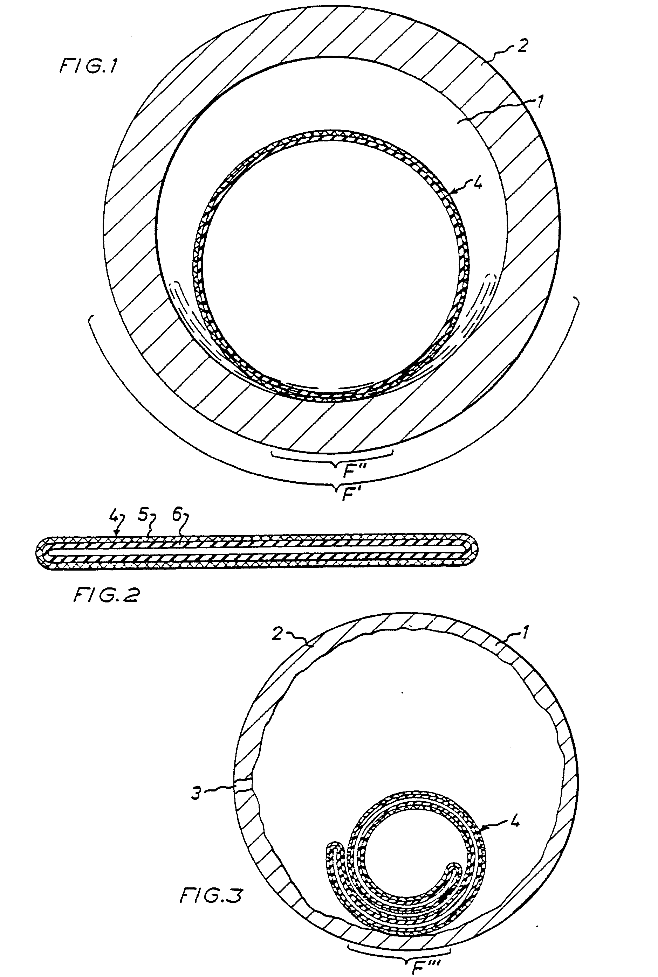

In the drawings, 1 designates a cavity which can be formed of a pipe 2 of metal, plastic material, concrete or the like. The cavity 1 may also be formed of successive holed blocks with no claim to tightness, e.g. of insulating material of little mechanical strength. The pipe may have a damage for example in the form of a crack as indicated at 3 in Fig. 2.

To provide a passage for the medium to be conveyed through the cavity or conduit a lining in the form of a hose 4 is fitted therein. The lining hose comprises an outer, pressure-absorbing, suitably stocking-like layer 5 and an inner, fluid-tight layer 6 which is resistant to the medium to be conveyed.

The lining hose is delivered to the place for use in the flattened condition shown in Fig. 2, which facilitates transport, storage and handling.

In principle one might bend up the flattened lining hose and pull it through the pipe cavity 1, as is indicated with dashed lines in Fig. 1. However, as the friction surface F' facing the cavity wall would thus become comparatively large and the edge portions would press against the cavity wall due to the intrinsic elasticity of the lining hose material, it is preferable to inflate the hose so as to assume the shape indicated by full lines, prior to the operation of drawing the hose into suitably insulated cavities with smooth and undamaged walls. The friction surface F' will thereby be reduced and the required pull will become considerably lower.

As the lining hose is peripherally expandible up to a certain limit and thereupon does not yield one may let it remain inflated during the pulling-in operation only to such a degree that it will assume round shape. After the lining hose has been connected to couplings, T-pieces or the like arranged at the respective ends of the pipe section it may be set under full pressure whereby it expands and fills out, or almost fills out the cavity 1.

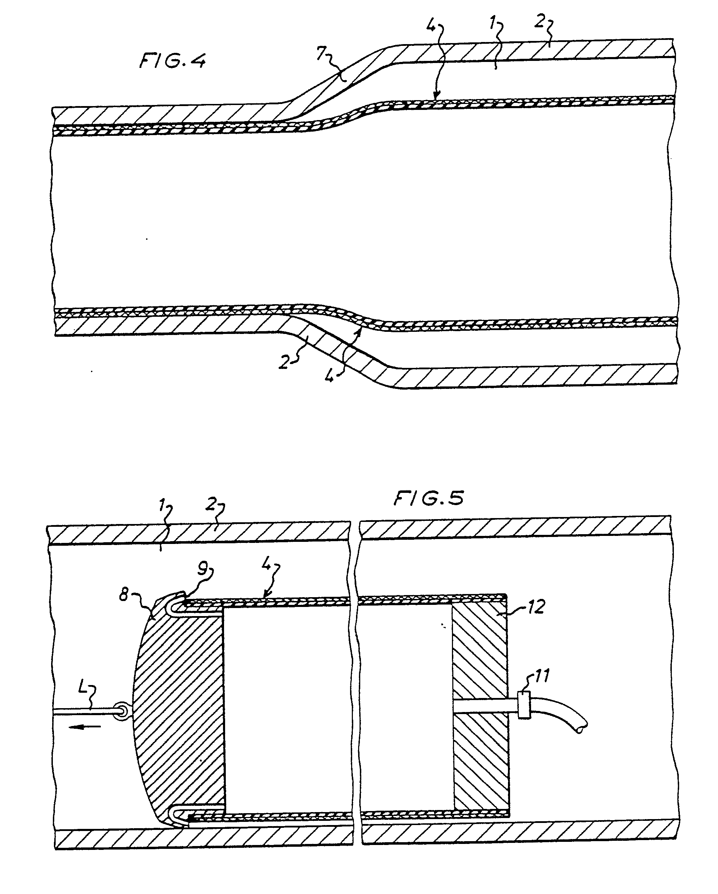

When a lining tube or hose is to be drawn into a damaged pipe with a rugged or rough surface it is convenient to roll up the hose 4 and hold it together temporarily during the drawing operation, as indicated in Fig. 3. This can be done by attaching around the rolled-up hose adhesive tapes which are strong enough to keep the hose rolled up but burst when the hose is set under pressure. Alternatively, when the hose is rolled up in connection with its introduction at the end of the cavity 1 one may wind round it a thin wire or the like attached to the cable by means of which the hose is drawn through the cavity. To the same cable a conical guide sleeve should suitably be attached in which the hose end is inserted and fastened. When the hose is in position the wire is slackened and detached and the guide sleeve is removed whereby the wire can be pulled out and the hose can unfold.

When a rolled-up hose is used the friction surface F''' will be very small. Another advantage is that, as the cross-section of the hose is minimized, it is easy to pass constrictions, if any.

The ability of the hose to expand peripherally makes it possible to completely fill out the available space in the pipe.

The area of the cavity is decisive for the hose dimension and the aim is that the hose in fully expanded condition should fill out the cavity area as much as possible.

Since the hose is peripherally elastic to a limited degree it can function without hindrance even if the cavity should have local constrictions, as indicated at 7 in Fig. 4.

Axially, i.e. in the longitudinal direction of the lining hose, it is unelastic and has no essential tendency to expand and contract, which, for one thing, reduces the strains on the connection points.

As the outer layer is pressure-absorbing the hose can also without problems be allowed to pass fractures and cracks in the pipe and the only condition for this is that the fracture must not be such that the cavity cross-section is entirely obstructed by sunk pipe wall portions or penetrating ground material. A moderate local reduction of the cavity cross-section, which dies not prevent introduction of the hose, has no appreciable influence on the conveying ability of the pipe.

Even if part of a pipeline has fallen out entirely, for example because underlying ground material has sunk, the conveying ability of the pipeline can be rapidly restored by uncovering the fracture ends and pulling the lining hose, which has been drawn into the pipe part on one side of the rupture, freely over the rupture so as to bridge it, passing the hose into the pipe part on the other side and pulling it on through this part up to the following joint. In order to prevent the lining hose from being compressed by the filling material it should be set under pressure before the excavation is refilled.

The outer layer of the lining hose can be made up of woven polyester yarn, for example, which gives the required strength and low friction against the cavity wall. The inner layer is suitably made up of a rubber composition which is decided with regard to the nature of the medium to be conveyed.

To facilitate pulling of the lining hose 4 into the cavity 1 the front plug 8 of the two plugs required to enable inflation, i.e. the plug situated at the front end of the lining hose and connected to the drawing cable L, may be provided with exhaust openings 9 directed in backward direction, i.e. towards the rear end of the hose. As part of the pressure medium keeping the lining hose inflated is allowed to flow out in backward direction an assisting pull is obtained at the same time as the outflowing medium acts as a friction-reducing lubricant. New pressure medium, replacing the discharged medium, is preferably continuously supplied through a connection 11 to the plug 12 arranged in the rear end of the lining hose.

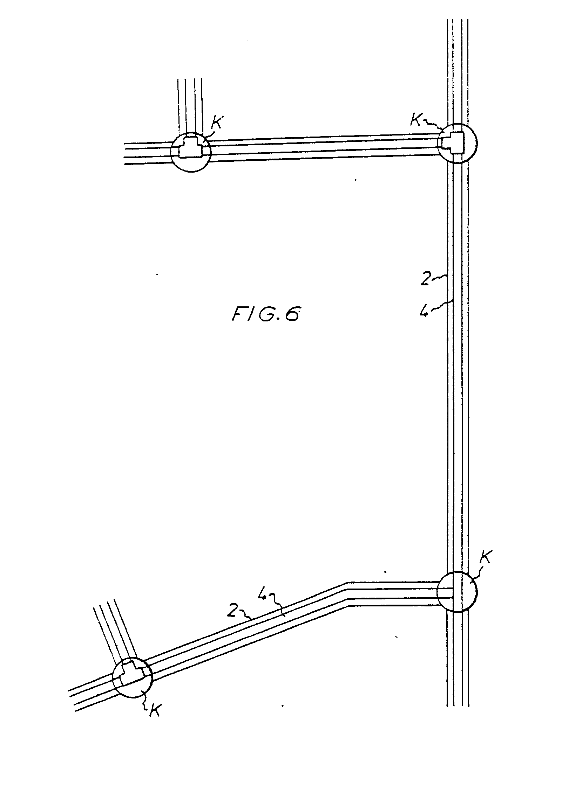

Fig. 6 illustrates that for repairing a pipe system it is sufficient to have access to the coupling points K of the system, i.e. as a rule the manholes. Lining hoses can be introduced into the pipes in either direction by starting from these points.

The connection of the lining hose to undamaged parts of the pipeline or jointing of the lining hose is preferably effected by pushing the hose over the outside of an intact pipe section or a pipe piece adjusted for this purpose and fixing the hose by peripherally active clamp connections. Thus the lining hose will not be subjected to bending or breaking resulting in fractures. As the lining hose is passed on the outside of one end of a pipe section the opposite end thereof can be connected with the other piping in the same manner as before. It is also possible to use conventional branches, valves and the like.

If damage has been encountered on a sleeve pipeline one may uncover a sleeve connection on either side of the damage, cut the pipeline immediately inside of the respective connection so that the interior of the piping will be accessible and then introduce the lining hose the ends of which are thereupon passed over the outside of the pipe sections joining the sleeve connections. In pipelines with flange connections the piping can be cut in a similar manner a distance inside of two flange connections, whereupon the hose is passed over and clamped on the portions of the pipe close to the flange connections. In certain cases the pipe section close to the flange connection can be disassembled and replaced by a pipe piece having a somewhat smaller outer diameter than the original pipe and being provided with a flange. Also in pipelines provided with sleeve connections it may be convenient in certain cases to utilize special connection units having a hose connection of slightly reduced outer diameter. The connection unit may be slightly shorter than the removed pipe portion so that the lining hose will run freely over a short section.

## Claims

1. A hose-like lining for restoring or making a conveyor channel or pipeline for fluid, especially water, along an already existing cavity (1) formed of a section of a damaged and untight conventional pipeline or consisting of holes in successively arranged elements, e.g. of insulating material, by insertion of the lining in said cavity, the lining including an inner layer (6) which is fluid-tight, permanently elastic, soft and resistant to the material being conveyed, characterized by the hose-like lining (4) including a covering (5) of durable, pressure-absorbing, non-fluid-tight material which has insignificant ability to expand and contract axially, but is peripherally permanently elastic to a limited degree so as to be expandible in the peripheral sense to a certain limit, and by that the limit of the peripheral elasticity of the hose-like lining is thereby so preset in relation to the size of the cavity that the lining, in its expanded state, will reach a diameter essentially not exceeding the normal diameter of the cavity.

2. A hose-like lining as claimed in claim 1, characterized in that the lining prior to an insertion operation is adapted to receive end plugs to make the lining inflatable to a circular shape and in that the plug (8) fitted in the front end of the lining is provided with outlet openings (9), directed opposite to the insertion direction, for ejecting pressure medium facilitating said insertion operation.

## Patentansprüche

1. Auskleidschlauch zum Erneuern oder zur Herstellung eines Förderkanals oder einer Rohrleitung für Fluid, insbesondere Wasser, an einem bereits vorhandenen Hohlraum (1) entlang, der durch einen Abschnitt einer beschädigten und undichten herkömmlichen Rohrleitung gebildet ist oder aus Löchern in in einer Reihe angeordneten Elementen besteht, z.B. aus isolierendem Material, durch Einsetzen des Auskleidschlauches in den genannten Hohlraum, wobei der Auskleidschlauch eine Innenschicht (6) aufweist, die fluiddicht, dauerelastisch, weich und gegenüber dem zu fördernden Medium beständig ist, dadurch gekennzeichnet, dass der Auskleidschlauch (4) eine Hülle (5) aus haltbarem, druckaufnehmendem, nicht fluiddichtem Material aufweist, welches eine unbedeutende Fähigkeit hat, sich in Axialrichtung auszudehnen und zusammenzuziehen, aber peripher bis zu einem gewissen Grad dauerelastisch ist, so dass es in peripherer Richtung bis zu einer gewissen Grenze ausdehnbar ist, und dadurch, dass die Grenze der peripheren Elastizität des Auskleidschlauches dabei so im Verhältnis zur Grösse des Hohlraumes vorgegeben ist, dass der Auskleidschlauch im expandierten Zustand einen Durchmesser erreicht, der im wesentlichen den normalen Durchmesser des Hohlraumes nicht übersteigt.

2. Auskleidschlauch nach Anspruch 1, dadurch gekennzeichnet, dass der Schlauch vor dem Einsetzen für die Aufnahme von Endstopfen vorgesehen ist, um den Schlauch zu runder Form aufblasen zu können, sowie dass der am vorderen Ende des Schlauches befestigte Stopfen (8) mit entgegen der Einsetzrichtung gerichteten Auslassöffnungen (9) versehen ist, um Druckmedium ausströmen zu lassen, was das Einsetzen erleichtert.

## Revendications

1. Chemise du tupe gaine souple pour réparation ou fabrication d'une conduite de transport pour un fluide, en particulier pour de l'eau, le long d'une cavité (1) déjà existante formée d'une portion d'une conduite conventionnelle endommagée et non étanche ou constituée de trous dans des éléments disposés successivement, par exemple en matériau isolant, par introduction de la chemise dans ladite cavité, la chemise comportant une couche intérieure (6) qui est étanche au fluide, qui présente une élasticité permanente, qui est douce et résistante au matériau à transporter, caractérisée par le fait que la chemise du type gaine souple (4) comporte un revêtement (5) en matériau durable, résistant à la pression, non étanche au fluide, qui présente une aptitude non significative à se dilater et se contracter dans le sens axial, mais qui est de façon permanente élastique dans le sens périphérique jusqu'à un certain degré, de façon à pouvoir se dilater dans le sens périphérique jusqu'à une certaine limité;

et par le fait que l'on prédétermine la limite de l'élasticité périphérique de la chemise du type gaine souple par rapport à la dimension de la cavité de façon telle que la chemise, dans son état dilaté, va atteindre un diamètre qui ne dépasse pas sensiblement le diamètre normal de la cavité.

2. Chemise du type gaine souple selon la revendication 1, caractérisée en ce qu'avant l'opération d'introduction de la chemise, on adapte la chemise pour recevoir des bouchons d'extrémité de façon à rendre la chemise gonflable pour prendre une forme circulaire; et en ce que le bouchon (8) placé à l'extrémité avant de la chemise comporte des ouvertures de sortie (9) dirigées en sens opposé au sens de l'introduction, de façon à éjecter un fluide sous pression qui facilite ladite opération d'introduction.

FIG.1

FIG.2

FIG.3

0 101 712

FIG.4

FIG.5

2

FIG.6